Europäisches Patentamt

European Patent Office

Office européen des brevets

(19)

(11) **EP 1 440 952 A1**

(12) # EUROPEAN PATENT APPLICATION
published in accordance with Art. 158(3) EPC

(43) Date of publication:
**28.07.2004 Bulletin 2004/31**

(51) Int Cl.⁷: **C03C 17/30**, C09K 3/18,
B32B 17/06

(21) Application number: **02765488.8**

(22) Date of filing: **11.09.2002**

(86) International application number:
**PCT/JP2002/009275**

(87) International publication number:
**WO 2003/024880 (27.03.2003 Gazette 2003/13)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **14.09.2001 JP 2001279321
18.06.2002 JP 2002176997**

(71) Applicant: **WILLSON CO., LTD.
Tokyo 165-0032 (JP)**

(72) Inventor: **TANABE, Katsutoshi
Higashimurayama-shi, Tokyo 189-0001 (JP)**

(74) Representative: **Thomson, James B.
Frank B. Dehn & Co.
179 Queen Victoria Street
London EC4V 4EL (GB)**

(54) **TWO−PACK TYPE WATER REPELLANT FOR GLASS SURFACE**

(57) This invention provides a two-pack type water repellent for glass surface which forms a water-repellent film capable of manifesting excellent water repellency over a long period of time when applied to the surface of glass of automobiles and the like and which shows excellent storage stability. A two-pack type water repellent of this invention is used by mixing the two liquids immediately before application to the surface of glass and comprises liquid A containing a fluorosilane compound having a hydrolyzable functional group as an active ingredient and liquid B containing a catalyst ingredient exerting.

**EP 1 440 952 A1**

**Description**

Field of Technology

This invention relates to a two-pack type water repellent which is applied to the surface of glass windows and mirrors of automobiles, electric cars, airplanes, ships, houses and the like to prevent rainwater and drops of water from reducing visibility by adhering to the surface of glass.

Background Technology

In driving automobiles on rainy days, for example, it is customary to apply water repellents to the surface of glass such as windshields and mirrors in order to secure good visibility and water repellents containing amino-modified polysiloxanes as main ingredients are proposed in JP7-41,336 A, JP8-73,241 A and JP2000-129,248 A or those containing fluoroalkylsilanes as main ingredients are proposed in JP8-277,388 A, JP9-104,861 A, JP11-349,929 A, JP2001-115,151 A and JP2,814,259.

Water repellents of the former type or those containing amino-modified polysiloxanes as main ingredients have an advantage in that they can be used easily on rainy days because they are easy to apply to the surface of glass and they can be used even in the presence of moisture; however, they show poor water repellency as they contain hydrophilic amino groups and poor durability as their molecular skeleton consists of silicone.

In contrast, water repellents of the latter type or those containing fluoroalkylsilanes as main ingredients have an advantage in that they are highly durable as they contain fluorine atoms in their molecular skeleton and further serve to prevent formation of oily films because of the oil-repellent effect of the fluoroalkylsilanes; however, the product deteriorates markedly in water repellency when it gets mixed with moisture and, in addition, the product lacks storage stability because of the presence of a catalyst ingredient such as an acid and an alkali.

Disclosure of the Invention

The inventors of this invention have conducted studies to find a way to solve the aforementioned problems associated with the conventional water repellents for glass surface, found that the storage stability can be improved markedly and, at the same time, the deterioration of water repellency by moisture can be prevented by storing the main ingredients or a fluorosilane compound such as a fluoroalkylsilane and its catalyst ingredient in separate containers and mixing the fluorosilane compound and the catalyst ingredient immediately before application to the surface of glass, and completed this invention.

Accordingly, an object of this invention is to provide a two-pack type water repellent which forms a water-repellent film capable of retaining excellent water repellency over a long period of time when applied to the surface of glass of automobiles and the like and which shows excellent storage stability.

Thus, this invention relates to a two-pack type water repellent which is used by mixing the two liquids or a liquid in the first pack and a liquid in the second pack immediately before application to the surface of glass and comprises liquid A containing a fluorosilane compound having a hydrolyzable functional group as an active ingredient and liquid B containing a catalyst ingredient exerting a catalytic action on the fluorosilane compound as an active ingredient.

In this invention, fluorosilane compounds having hydrolyzable functional groups useful as active ingredients of liquid A include fluoroalkylsilanes having hydrolyzable functional groups represented concretely by the following general formula (1) (wherein R is a hydrocarbon group containing 1-6 carbon atoms and may contain phenyl group and unsaturated linkage and/or ether linkage, X is a hydrolyzable functional group, n and m are integers of 0·15 and $\alpha$ is an integer of 1-3) and fluoropolyethersilanes having hydrolyzable functional groups.

$$CF_3(CF_2)_n(CH_2)_m \, Si\text{-}R_{(3\text{-}\alpha)} \, X_\alpha \qquad\qquad (1)$$

These compounds may be used singly or as a mixture of two or more. The hydrolyzable functional groups here are exemplified by alkoxy groups containing 1-3 carbon atoms, halogen atoms such as chlorine, amido group and aminoxy group; alkoxy groups containing 1-3 carbon atoms are preferred and the value of $\alpha$ is preferably 2 or 3.

Concrete examples of the aforementioned fluorosilane compounds having hydrolyzable functional groups are listed below.

$CF_3(CH_2)_2\text{-}Si(OCH_3)_3$ (TSL8262, tradename of GE Toshiba Silicones Co., Ltd; AY43-013, tradename of Dow Corning Toray Silicone Co. Ltd.; KBM7103. tradename of Shin-Etsu Chemical Co., Ltd.)
$CF_3(CF_2)_5(CH_2)_2\text{-}Si(OCH_3)_3$ (TSL8257, tradename of GE Toshiba Silicones Co., Ltd.)
$CF_3(CF_2)_7(CH_2)_2\text{-}Si(CH_3)(OCH_3)_2$ (TSL8231, tradename of GE Toshiba Silicones Co., Ltd.)
$CF_3(CF_2)_3(CH_2)_2\text{-}Si(OC_2H_5)_3$ (AY43-154E, tradename of Dow Corning Toray Silicone Co., Ltd.)
$CF_3(CF_2)_7(CH_2)_2\text{-}Si(OC_2H_5)_3$ (AY43-158E, tradename of Dow Corning Toray Silicone Co., Ltd.)
$CF_3(CH_2)_2\text{-}SiCl_3$ (TSL8261, tradename of GE Toshiba Silicones Co., Ltd.)
$CF_3(CF_2)_5(CH_2)_2\text{-}SiCl_3$ (TSL8256, tradename of GE Toshiba Silicones Co., Ltd.)
$CF_3(CF_2)_7(CH_2)_2\text{-}SiCl_3$ (TSL8232, tradename of GE Toshiba Silicones Co., Ltd.)
$CF_3(CF_2)_7(CH_2)_2\text{-}Si(OCH_3)_3$ (TSL8233, tradename of GE Toshiba Silicones Co., Ltd.)
$CF_3(CF_2)_7(CH_2)_2\text{-}Si(CH_3)Cl_2$ (TSL8229, tradename of GE Toshiba Silicones Co., Ltd.)
$n\text{-}C_8H_{17}(CH_2)_2\text{-}Si(OCH_3)_3$ (KBM7803, tradename of Shin-Etsu Chemical Co., Ltd.)
$CF_3(CH_2)_2\text{-}Si(OCH_3)_3$ (KBM7801, tradename of Shin·Etsu Chemical Co., Ltd.)
$n\text{-}C_8H_{17}(CH_2)_2\text{-}SiCl_3$ (KA7803, tradename of Shin-Etsu Chemical Co., Ltd.)
$CF_3(CH_2)_2\text{-}SiCl_3$(KA7103, tradename of Shin-Etsu Chemical Co., Ltd.)

The catalyst ingredients constituting liquid B exert a catalytic action on the aforementioned fluorosilane compounds having hydrolyzable functional groups when they undergo hydrolysis to form water-repellent films on the surface of glass and such catalyst ingredients are exemplified by the following compounds.

[Metal-containing organic compounds]

① Metal salts of 2-ethylhexanoic acid

They are represented by the general formula $[CH_3(CH_2)_3CH(CH_2CH_3)_2COO]_2M$ (wherein M is a metal such as Ca, Zn, Fe, Sn and Zr).

② Metal salts of naphthenic acid

③ Metal alkoxides

④ Metal acetylacetonate complexes

They are represented by the general formula $[M(CH_3COCHCOCH_3)_n]$ and include the following compounds: $[Al(C_5H_7O_2)_3]$, $[Cr(C_5H_7O_2)_3]$, $[Co(C_5H_7O_2)_2(H_2O)_2]$, $[Co(C_5H_7O_2)_3]$, $[Cu(C_5H_7O_2)_2]$, $(Fe(C_5H_7O_2)_3]$, $[Ni(C_5H_7O_2)_2(H_2O)_2]$, $[VO(C_5H_7O_2)_2]$, $[Zn(C_5H_7O_2)_2(H_2O)]$, $[In(C_5H_7O_2)_3]$, $[Ca(C_5H_7O_2)_2(H_2O)]$, $[Mg(C_5H_7O_2)_2(H_2O)_2]$, $[Mn(C_5H_7O_2)_2(H_2O)_2]$, $[Y(C_5H_7O_2)_3]$, $[Ce(C_5H_7O_2)_3]_3(H_2O)$, $[Sr(C_5H_7O_2)_2(H_2O)_2]$, $[Pd(C_5H_7O_2)_2]$, $[Ba(C_5H_7O_2)_2(H_2O)_2]$, $[MoO_2(C_5H_7O_2)_2]$, $[La(C_5H_7O_2)_3(H_2O)_2]$, $[Zr(C_5H_7O_2)_4]$, $[Sn(C_4H_9)_2(C_5H_7O_2)_2]$, $[Ti(OC_4H_9)_2(C_5H_7O_2)_2]$, $Al(C_5H_7O_2)_3/C_6H_5CH_3$ and $In(C_5H_7O_2)_3/C_5H_7O_2$.

⑤ Organometallic compounds and others (including metal complexes)

Their examples are $C_{26}H_{52}O_4Sn$ (dibutyltin trimethylhexanoate), dibutyltin dioctanoate, dibutyltin dilaurate, dibutyltin diacetate, dibutyltin distearate, metal-containing organic molecular aggregates such as amino acid-based metallic soaps represented by the general formula $M[COO(CH_2)_2CH(NHCO\text{-}R)COO]M$ (R: $C_{11}H_{23}$ to $C_{17}H_{35}$) and exemplified by Aminometal (tradename of Kabushiki Kaisha Nikko) and metal oxides exhibiting a catalytic activity such as zinc oxide.

[Acids and bases]

⑥ Acids

They include inorganic acids such as hydrochloric acid, nitric acid, sulfuric acid and phosphoric acid and organic acids such as formic acid, acetic acid, oxalic acid, maleic acid and fumaric acid.

⑦ Bases

They include inorganic bases such as sodium hydroxide, potassium hydroxide and ammonia and organic bases such as cyclic amines (morpholines containing an ether linkage), cyclic diamines (piperazine) and alkanolamines

EP 1 440 952 A1

(aminoalcohols).

Any of these catalyst ingredients may be used singly or mixed with one or more selected from the same or different kind of catalyst ingredients unless the mixture undergoes a reaction to lose the catalytic activity as in the case of mixing an acid and a base.

Of the aforementioned catalyst ingredients, metal-containing organic compounds, in particular, dibutyltin tri-methylhexanoate and $[Ti(OC_4H_9)_2(C_5H_7O_2)_2]$, exert the least influence on the coated surface and exhibit good reactivity and are suitable for forming films of excellent water repellency. Moreover, it is allowable to add one or more of inorganic acids such as sulfuric acid and nitric acid, organic acids such as oxalic acid and maleic acid and bases such as aminoalcohols and inorganic bases to these metal-containing organic compounds in order to adjust the operating time for coating the surface of glass, particularly to adjust the reaction time with fluoroalkylsilanes.

As for a solvent constituting the aforementioned liquid A and/or liquid B, any solvent is satisfactory if it dissolves the aforementioned fluorosilane compounds and catalyst ingredients, reacts with neither of them and volatilizes easily; for example, an alcohol such as methanol, ethanol, n-propyl alcohol, isopropyl alcohol and n-butyl alcohol, a silicone such as a cyclic siloxane containing 3-10 silicon atoms, a glycol such as ethylene glycol, an aromatic solvent such as toluene and xylene, an ester such as ethyl acetate and butyl acetate, a ketone such as acetone and methyl ethyl ketone and a cycloparaffin such as decalin. Furthermore, a petroluem-derived solvent such as petroleum naphtha, solvent naphtha, petroleum ether, petroleum benzine, isoparaffin, normal paraffin, cycloparaffin, industrial gasoline, liquid paraffin, ligroin and kerosene can be used as a diluent. The solvent constituting liquid A and the one constituting liuid B may be identical with or different from each other; however, liquid A must mix readily and uniformly with liquid B before application to the surface of glass and it is preferable to use the same solvent for liquid A and liquid B.

The ratio of the fluorosilane compound in liquid A to the catalyst ingredient in liquid B is controlled so that the fluorosilane compound accounts for 0.05-10 wt%, preferably 0.5-5 wt%, and the catalyst ingredient accounts for 0.01-10 wt%, preferably 0.05-5 wt%, of a coating solution (water repellent) obtained by mixing liquid A and liquid B, although the ratio may vary with the kind of fluorosilane compound and catalyst ingredient in use. A uniform water-repellent film forms with difficulty when a coating solution containing less than 0.05 wt% of the fluorosilane compound is applied to the surface of glass. Contrarily, the water-repellent film formed on the surface of glass tends to turn cloudy when a coating solution contains more than 10 wt% of the fluorosilane compound. Moreover, the reaction does not proceed sufficiently when the concentration of catalyst ingredient is less than 0.01 wt% and the water-repellent film formed tends to be nonuniform. Contrarily, in the case where an acid is used as a catalyst ingredient in a concentration of more than 10 wt%, the acid would adhere to the coated surface thereby exerting an undesirable influence such as degradation of the coated surface.

The concentrations of the fluorosilane compound in liquid A and catalyst ingredient in liquid B are nonrestrictive as long as the concentrations of the two in the final coating solution resulting from mixing of liquid A and liquid B satisfy the aforementioned requirement. In consequence, the containers for liquid A and liquid B can be designed suitably in consideration of packaging form, ease of handling and the like and the volumes of liquid A and liquid B can be adjusted easily by the solvent finally constituting the coating solution.

Furthermore, for the purpose of improving the manipulability in coating of the surface of glass and the lubricity of the surface of glass against the wiper in motion, it is allowable in this invention to incorporate in liquid A and/or liquid B liquid-dispersible fine particles which disperse in a coating solution obtained by mixing liquid A and liquid B.

The liquid-dispersible fine particles useful for this purpose include fine particles of the following inorganic substances; silicon oxide, metal silicates such as calcium silicate, magnesium silicate, strontium silicate, aluminum silicate, barium silicate and magnesium metasilicoaluminate, metal carbonates such as calcium carbonate, magnesium carbonate and cobalt carbonate, metal tungstates such as calcium tungstate, metal oxide such as cobalt oxide and $\alpha$-iron oxide, metal hydroxides such as iron hydroxide and others such as synthetic zeolite, natural zeolite, kieselguhr, aluminum oxide, cerium oxide, zirconium oxide, aluminum hydroxide, barium sulfate, bentonite and talc. Examples of organic substances are fine particles of polytetrafluoroethylene, polyethylene, benzoquanamine · melamine condensate, nylon, cellulose, polystyrene (beads), polypropylene, acrylic resin, phenolic resin, polyvinyl alcohol, silicone resin and silicone elastomer and pulverized mixtures of inorganic carriers and high proportions of a variety of silicones (for example, Torayfil F series available from Dow Corning Toray Silicone Co., Ltd.). A further example is hydrophobic inorganic fine particles obtained by rendering the surface of the aforementioned inorganic fine particles hydrophobic by treating with organic silicon compounds, metallic soaps and the like.

Of the aforementioned liquid-dispersible fine particles, particularly preferable from the viewpoint of improving the manipulability in the coating operation and the lubricity of the surface of glass against the wiper in motion are hydrophobic silica which is obtained by chemically linking an organic silicon compound to hydrous silicon thereby changing the originally hydrophilic surface completely to the hydrophobic surface (for example, Nipsil SS series available from Nippon Silica Industrial Co., Ltd.) and hydophobic silica which is obtained by carrying out a chemical reaction between the hydroxyl groups on the surface of silica and an organic silicon compound (for example, Sylophobic series available from Fuji Silysia Chemical Ltd.). Rendering the surface of liquid-dispersible fine particles hydrophobic (lipophilic) not only improves the dispersibility in liquid A, liquid B or the coating solution but also makes it possible to apply the water-repellent ingredients uniformly thereby forming a film of excellent water repellency. In case the lipophilic property is expressed in terms of oil absorption, the liquid-dispersible fine particles show an oil absorption of 75 ml/100 g or more, preferably 100 ml/100 g or more. Fine particles with an oil absorption of less than 75 ml/100g form water repellent films merely comparable to those formed by fine partilces the surface of which is not rendered hydrophobic.

The average particle diameter of the aforementioned liquid-dispersible fine particles is in the range of 0.5·15 µm, preferably in the range of 1.0-5.0 µm. Particles with an average particle diameter of less than 0.5 µm tend to stick to the surface of glass in the finishing step and cause the possibility of adversely affecting the wipe-off quality. On the other hand, particles with an average particle diameter of more than 15 µm are not desirable as they cause the possibility of scratching the surface of glass in the coating step.

Furthermore, in this invention, it is allowable to add a third ingredient, if necessary, to liquid A and/or liquid B; for example, organopolysiloxanes for modifying the water-repellent films (increasing the slip angle), UV absorbers and the like for improving the weatherability of the films, and perfumes for masking unpleasant odor originating from the solvent.

In the case where two or more catalyst ingredients are used together and there is the possibility of their reacting with one another or where organic fine particles are used as liquid-dispersible fine particles together with a catalyst ingredient showing the possibility of reacting with the organic fine particles, a third liquid or powder may be constituted separately either in one part or two or more parts in addition to liquid A and liquid B.

The procedure for packaging liquid A and liquid B is nonrestrictive as long as it allows storage of liquid A and liquid B until immediately before application to the surface of glass. For example, in the case of two-pack type water repellents for automotive use, any one of the following procedures may be followed for packaging liquid A and liquid B are respectively subdivided into small portions and stored in small containers and, immediately before application to the surface of automotive glass, liquid A and liquid B are transferred to a relatively large container and mixed thoroughly there to prepare a coating solution; one of liquid A and liquid B (for example, liquid A) is stored in a relatively large container while the other (for example, liquid B) is stored in a small container and, immediately before application to the surface of automotive glass, liquid B in the small container is transferred to liquid A in the relatively large container and mixed thoroughly there to prepare a coating solution; a container is partitioned into two compartments, each compartment is provided with an opening with the two openings located adjacent to each other, liquid A and liquid B are separately stored in the compartments and, at the time of coating, they are let to flow out in the specified amounts and get mixed for application.

As for the method for using a two-pack type water repellent prepared in the aforementioned manner, a coating solution containing a mixture of liquid A and liquid B at a specified ratio is applied to the surface of glass of an automobile and the like by means of a towel, sponge, nonwoven fabric, tissue paper and the like, the solvent is evaporated from the coated solution, the coated surface is allowed to dry sufficiently and, after the reaction of the surface of glass with the fluoroalkylsilane proceeded sufficiently, the excess ingredients on the surface of glass are wiped off for finish by means of a material which does not scratch glass such as a towel, nonwoven fabric and fleece. Or, a coating solution containing a mixture of liquid A and liquid B at a specified ratio is taken up in a towel, nonwoven fabric or fleece and applied to the surface of glass while removing the excess at the same time.

Preferred Embodiments of the Invention

A preferred mode of practicing this invention will be described concretely below with reference to the accompanying examples and comparative examples.

Examples 1-7

In each example, Liquid A and liquid B having the composition shown in Table 1 were prepared by using $CF_3(CF_2)_7(CH_2)_2Si(OC_2H_5)_3$ (AY 43-158E, tradename of Dow Corning Toray Silicone Co., Ltd.) as fluorosilane compound, dibutyltin trimethylhexanoate (SNW-50, tradename of Hope Chemical Co., Ltd.), $[Ti(OC_4H_9)_2(C_5H_7O_2)_2]$ (NĀCEM® Titanium, tradename of Nihon Kagaku Sangyo Co., Ltd.), sulfuric acid and an aminoalcohol (Aminoalcohol 2Mabs, tradename of Nippon Nyukazai Co., Ltd.) as catalyst ingredient, ethanol (EtOH) and a cyclic siloxane (SH245, tradename of Dow Corning Toray Silicone Co., Ltd.) as solvent and hydrophobic silica (Nipsil SS-10, tradename of Nippon Silica Industrial Co., Ltd.) as liquid-dispersible fine particles.

Liquid A and liquid B are mixed thoroughly to prepare a coating solution immediately before application to the surface of window glass of an automobile, the coating solution was applied to the surface of glass by the use of nonwoven fabric, the coated surface was dried and, after the surface of glass reacted sufficiently with the fluoroalkylsilane, the coated surface was wiped with a dry towel to form a water-repellent film on the surface of glass and the wipe-off quality after application, initial water repellency, durability of water repellency, lubricity, effect on coated surface and storage stability were examined and evaluated. The results are shown in Table 1.

[Wipe-off quality after coating]

The coating solution was applied to the surface of glass by the use of sponge, the coated surface was dried and, after the surface of glass reacted sufficiently with the fluoroalkylsilane, the coated surface was wiped off by a dry towel until the surface of glass assumed a constant condition by visual observation of the surface and the results were evaluated in the following 4 grades: ◎ simple to finish even and clean; ○ requiring labor to finish even and clean; △ unevenness remaining and no possible to finish clean; × not possible to wipe off.

[Initial water repellency]

A test specimen was prepared by treating the surface of glass for water repellency by a specified method and the specimen was measured for the contact angle by dropping 0.04 ml of water at room temperature (25°C) with the aid of an instrument for precise measurement of the contact angle (Model CA-1, available from Kyowa Kagaku Co., Ltd.) and the results were evaluated in the following 4 grades; ◎ 97.5 degrees or more; ○ ranging from 92.5 degrees to less than 97.5 degrees; △ ranging from 87.5 degrees to less than 92.5 degrees; × less than 87.5 degrees.

[Durability of water repellency]

(Test 1: Accelerated test at constant temperature]

A test specimen was prepared by treating the surface of glass for water repellency by a specified method and the specimen was immersed in a test solution (a 10 wt% aqueous solution of ethanol with its pH adjusted to approximately 4.0 by addition of sulfuric acid), the specimen and the test solution were left standing in a constant-temperature bath at 50°C, taken out every 5 hours, allowed to cool to room temperature, and the test specimen was measured for the contact angle as above, and the time for the contact angle to fall below 80.0 degrees was measured.

(Test 2: Field test for durability)

The surface of a windshield of an automobile was treated for water repellency, the automobile was left outdoors and driven for approximately 100 km in a unit of one week, the windshield was showered with water once in every unit and the water repellency was visually observed.

(Evaluation of durability of water repellency)

The results of Tests 1 and 2 were evaluated collectively in the following 4 grades: ◎ showing water repellency of 100 hours or more in Test 1 and water repellency of 5 weeks or more in Test 2; ○ showing water repellency ranging from 50 hours to less than 100 hours in Test 1 and water repellency ranging from 3 weeks to less than 5 weeks in Test 2; △ showing water repellency ranging from 25 hours to less than 50 hours in Test 1 and water repellency ranging from 1 week to less than 3 weeks in Test 2; × not satisfying the requirement of △.

[Lubricity]

The surface of a windshield of an automobile was treated for water repellency by a specified method and the wiper was put in motion while spraying the windshield with water and observed for the presence or absence of juddering. The results were evaluated in 2 grades; ○ no juddering; × juddering.

[Effects on coated surface]

In the test for the effect of a water repellent on the coated surface of the body of an automobile, a test specimen was prepared in accordance with JIS K2396 (1994)-8.1.2, approximately 2 g or 2 ml of each water repellent (a coating solution obtained by mixing liquid A and liquid B in the case of a two-pack type water repellent) in the examples and comparative examples was dropped on the specimen, the specimen bearing the water repellent was left standing in a constant-temperature room at 50 ±2 °C for 6 hours, then allowed to cool at room temperature for 1 hour, the surface of a water-repellent film was wiped with clean gauze and the condition of the coated surface was visually observed. The results were evaluated in 3 grades: ○ no conspicuous deterioration of coating observed; △ whitening and extremely

weak blistering observed; × heavy blistering and peeling observed.

[Storage stability]

The water repellent (liquid A and liquid B separately in the case of a two-pack type) in each of examples and comparative examples was sealed in a high-density polyethylene (HDPE) container, left standing in a constant-temperature bath at 50 ±2 °C for 1 week, allowed to cool to room temperature and the resulting water repellent was used to treat the surface of glass for water repellency and the difference in water repellency before and after storage at constant temperature was examined. The results were evaluated in 3 grades: ○ no deterioration in water repellency, manipulability and other properties; △ some deterioration; × Conspicuous deterioration.

Table 1

| Composition of two-pack water repellent as coating solution (wt%) | | Example | | | | | | |
|---|---|---|---|---|---|---|---|---|
| | | 1 | 2 | 3 | 4 | 5 | 6 | 7 |
| Liquid A | AY43-158E | 2.0 | 2.0 | 2.0 | 2.0 | 2.0 | 2.0 | 2.0 |
| | Cyclic siloxane | - | - | - | - | 48.0 | - | 48. 0 |
| | Ethanol | 48.0 | 48.0 | 48.0 | 48.0 | - | 48.0 | - |
| Liquid B | Dibutyltin trimethylhexanoate | 0.5 | 0.5 | 0. 5 | 1.0 | 0. 5 | 0.5 | 0. 5 |
| | $[Ti(OC_4H_9)_2(C_5F_7O_2)_2]$ | - | - | 0.5 | - | - | - | - |
| | Sulfuric acid | - | 0.5 | - | - | - | - | - |
| | Aminoalcohol | 0. 5 | - | - | - | 0.5 | 0. 5 | 0. 5 |
| | Hydrophobic silica | 1.0 | 1.0 | 1.0 | 1.0 | 1.0 | 1.0 | 1.0 |
| | Cyclic siloxane | - | - | - | - | 48.0 | 48.0 | - |
| | Ethanol | 48.0 | 48.0 | 48.0 | 48.0 | - | - | 48.0 |
| Evaluation of performance | Wipe-off quality | ○ | ○ | ○ | ○ | ◎ | ○ | ○ |
| | Initial water repellency | ○ | ◎ | ○ | ○ | ◎ | ○ | ○ |
| | Durability of water repellency | ○ | ◎ | ○ | ○ | ○ | ○ | ○ |
| | Lubricity | ○ | ○ | ○ | ○ | ○ | ○ | ○ |
| | Effect on coated surface | ○ | △ | ○ | ○ | ○ | ○ | ○ |
| | Storage stability | ○ | ○ | ○ | ○ | ○ | ○ | ○ |

Comparative Examples 1-9

The water repellents having the compositions shown in Table 2 were prepared by the use of the same materials as used in the aforementioned Examples, namely, fluorosilane compound (AY43-158E), dibutyltin trimethylhexanoate (SNW-50), sulfuric acid, aminoalcohol (Aminoalcohol 2Mabs), hydrophobic silica (Nipsil SS-10), ethanol, cyclic siloxane (SH245) and silica (Sylysia 350, tradename of Fuji Silysia Chemical Ltd.) as liquid-dispersible fine particles.
The water repellents thus prepared were tested for the wipe-off quality after coating, initial water repellency, durability of water repellency, lubricity, effects on coated surface and storage stability and the results were evaluated as in the aforementioned examples. The results are shown in Table 2.

Table 2

| Composition of one-pack type waterrepellent (wt%) | | Comparative example | | | | | | | | |
|---|---|---|---|---|---|---|---|---|---|---|
| | | 1 | 2 | 3 | 4 | 5 | 6 | 7 | 8 | 9 |
| AY43-158E | | 2.0 | 2.0 | 2.0 | 2.0 | 2.0 | 2.0 | 2.0 | 2.0 | 2.0 |
| Dibutyltin trimethylhexanoate | | 0.5 | 0.5 | 0.5 | 0.5 | - | - | - | - | - |
| Sulfuric acid | | - | 0.5 | - | 0.5 | 1.0 | 1.0 | 1.0 | 1.0 | - |
| Aminoalcohol | | 0.5 | - | 0.5 | - | - | - | - | - | 1.0 |
| Hydrophobic silica | | 1.0 | 1.0 | - | - | - | - | 1.0 | - | - |
| silica | | - | - | 1.0 | 1.0 | - | 1.0 | - | 1.0 | 1.0 |
| Cyclic siloxane | | - | - | - | - | - | - | - | 96.0 | - |
| Ethanol | | 96.0 | 96.0 | 96.0 | 96.0 | 97.0 | 96.0 | 96.0 | - | 96.0 |
| Evaluation of performance | Wipe-off quality | ○ | ○ | ◎ | ◎ | Δ | ◎ | ○ | ○ | ○ |
| | Initial water repellency | ○ | ○ | ○ | ○ | ○ | ○ | ○ | ○ | ○ |
| | Durability of water repellency | Δ | ○ | Δ | ○ | ○ | ○ | ○ | ○ | Δ |
| | Lubricity | ○ | ○ | × | × | × | × | ○ | × | × |
| | Effect on coated surface | ○ | Δ | ○ | Δ | × | × | × | × | ○ |
| | Storage stability | × | × | × | × | × | × | × | Δ | × |

Industrial Applicability

The two-pack type water repellent for glass surface of this invention forms a water-repellent film capable of maintaining excellent water repellency over a long period of time as its two constituent liquids are mixed to prepare a coating solution immediately before application to the surface of glass of an automobile and the like and, besides, it shows excellent storage stability and maintains an excellent water repelling capability over a long period of time.

**Claims**

1.    A two-pack type water repellent for glass surface which is used by mixing the two liquids immediately before application to the glass surface and comprises liquid A containing a fluorosilane compound having a hydrolyzable functional group as an active ingredient and liquid B containing a catalyst ingredient exerting a catalytic action on the fluorosilane compound as an active ingredient and further comprises incorporated in liquid A and/or liquid B liquid-dispersible fine particles with an average particle diameter of 0.5-15 μm which disperse in a coating solution obtained by mixing liquid A and liquid B.

2.    A two-pack type water repellent for glass surface as described in claim 1 wherein the fluorosilane compound is a fluoroalkylsilane and/or a fluoropolyethersilane.

3.    A two-pack type water repellent for glass surface as described in claim 1 wherein the catalyst ingredient is one kind or a mixture of two kinds of more selected from metal-containing organic compounds, acids and bases.

4.    A two-pack type water repellent for glass surface as described in claim 1 wherein the coating solution obtained by mixing liquid A and liquid B contains the fluorosilane compound in the concentration range of 0.05-10 wt% and the catalyst ingredient in the concentration range of 0.01-10 wt%.

5.    A two-pack type water repellent for glass surface as described in claim 1 wherein the liquid-dispersible fine particles are inorganic fine particles the surface of which has been rendered hydrophobic.

6. A two-pack type water repellent for glass surface as described in claim 1 wherein a solvent constituting liquid A and/or liquid B is an alcohol-based solvent and/or a silicone-based solvent.

| INTERNATIONAL SEARCH REPORT | International application No. |
|---|---|
| | PCT/JP02/09275 |

**A. CLASSIFICATION OF SUBJECT MATTER**
Int.Cl$^7$  C03C17/30, C09K3/18, B32B17/06

According to International Patent Classification (IPC) or to both national classification and IPC

**B. FIELDS SEARCHED**

Minimum documentation searched (classification system followed by classification symbols)
Int.Cl$^7$  C03C15/00-23/00, C09K3/18, B32B1/00-35/00

Documentation searched other than minimum documentation to the extent that such documents are included in the fields searched

| Jitsuyo Shinan Koho | 1926-1996 | Toroku Jitsuyo Shinan Koho | 1994-2002 |
|---|---|---|---|
| Kokai Jitsuyo Shinan Koho | 1971-2002 | Jitsuyo Shinan Toroku Koho | 1996-2002 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| X | JP 9-53065 A  (Toyo Riken Kabushiki Kaisha), | 1-4,7 |
| Y | 25 February, 1997 (25.02.97), | 5,6 |
| | Claims; Par. No. [0001] | |
| | (Family: none) | |
| | | |
| Y | US 5695551 A  (DOW CORNING CORP.), | 5,6 |
| | 09 December, 1997 (09.12.97), | |
| | Claims; Column 5, lines 29 to 35 | |
| | & JP 10-183107 A | |
| | Claims; Par. No. [0030] | |
| | & AU 4760397 A          & CA 2221554 A | |
| | & EP 846668 A1          & KR 98-63914 A | |
| | & NO 975277 A           & NZ 329239 A | |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 December, 2002 (02.12.02) | 17 December, 2002 (17.12.02) |

| Name and mailing address of the ISA/ | Authorized officer |
|---|---|
| Japanese Patent Office | |
| Facsimile No. | Telephone No. |

Form PCT/ISA/210 (second sheet) (July 1998)